# EUROPÄISCHE PATENTSCHRIFT

(11) **EP 3 735 539 B1**
(45) Veröffentlichungstag und Bekanntmachung des Hinweises auf die Patenterteilung: **03.12.2025**
(21) Anmeldenummer: 19718318.9
(22) Anmeldetag: 12.04.2019
(51) Int. Cl.: F15B 21/00, F15B 1/22

(54) **DÄMPFUNGSVORRICHTUNG**
DAMPING DEVICE
DISPOSITIF AMORTISSEUR

(30) Priorität: 04.05.2018 DE 102018003644
(43) Veröffentlichungstag der Anmeldung: 11.11.2020
(73) Patentinhaber: Hydac Technology GmbH, 66280 Sulzbach (DE)
(72) Erfinder: GROBEN, Martin, 66280 Sulzbach (DE)
(74) Vertreter: Bartels und Partner, Patentanwälte
(86) Internationale Anmeldenummer: PCT/EP2019/059519
(87) Internationale Veröffentlichungsnummer: WO 2019/211084

(56) Entgegenhaltungen:
- WO-A1-2006/079931
- WO-A1-2010/066321
- DE-A1- 1 960 369
- DE-A1- 10 224 675
- DE-B1- 2 532 807
- FR-A- 1 605 326
- US-A- 4 603 711

## Beschreibung

Die Erfindung betrifft eine Dämpfungsvorrichtung für mit Druckpulsationen behaftete Fluide mit den Merkmalen von Anspruch 1.

Dämpfungsvorrichtungen, die einen ein nachgiebiges Druckpolster zur Verfügung stellenden Hydrospeicher aufweisen, sind Stand der Technik und werden in unterschiedlichen Fluidsystemen zur Glättung auftretender Druckpulsationen benutzt. Die DE 10 2007 003 724 A1 zeigt beispielsweise einen für den Einsatz als Dämpferspeicher benutzbaren Hydrospeicher in Form eines Membranspeichers. Bei verschiedenen Anwendungen, wie dem Einsatz bei chemischen/lebensmittelchemischen oder pharmazeutischen Anwendungen werden die Dämpfungsvorrichtungen oft für verschiedene Fluide eingesetzt, die nacheinander durch die Dämpfungsvorrichtung gefördert werden. Um den jeweils gültigen Reinheitsanforderungen Genüge zu leisten, beispielsweise die Lebensmittelvorschrift (FDA) zu erfüllen, muss bei einem Wechsel des geförderten Fluides eine Kontamination des Systems ausgeschlossen werden, d.h., Fluidreste müssen aus der Dämpfungsvorrichtung vollständig entfernt werden.

Das Reinigen von Dämpfungsvorrichtungen gestaltet sich problematisch. Ein wesentlicher Grund für die hierbei auftretenden Schwierigkeiten besteht darin, dass es kaum machbar oder praktisch unmöglich ist, die Fluidreste zu entfernen, die zwischen dem Trennelement des Hydrospeichers und der Speicherwand eingeschlossen sind, an der das Trennelement bei dem Reinigungsvorgang mit drucklosem Fluidraum anliegt. Man ist daher gezwungen, den Hydrospeicher zu demontieren, zu reinigen und wieder zusammenzubauen. Dieser Vorgang ist aufwendig und teuer, da auch Dichtelemente mit ausgetauscht werden müssen, so dass der Vorgang Zeit in Anspruch nimmt und sich eine lange Ausfallzeit des Systems ergibt.

Die FR 1 605 326 beschreibt eine Dämpfungsvorrichtung für mit Druckpulsationen behaftete Fluide mit den Merkmalen im Oberbegriff von Anspruch 1 mit mindestens einem Hydrospeicher, dessen Speichergehäuse ein erstes bewegliches Trennelement enthält, das eine Gasseite von einem ersten Fluidraum trennt und durch ein im ersten Fluidraum befindliches Fluid druckbeaufschlagbar ist, wobei als Bestandteil des Speichergehäuses ein Dämpfergehäuse mit einem zweiten Fluidraum vorgesehen ist, der vom mit Druckpulsationen behafteten Fluid durchströmbar ist und ein zweites bewegliches Trennelement enthält, das den zweiten Fluidraum von dem ersten Fluidraum des Hydrospeichers totraumfrei trennt, und wobei das Speichergehäuse mehrteilig aus Gehäuseteilen aufgebaut ist.

Weitere Dämpfungsvorrichtungen gehen aus der DE 102 24 675 A1, der DE 1 960 369 A, und der WO 2010/066321 A1 hervor.

Die WO 2006/079931 A1 zeigt ein Behälterspülsystem auf.

Im Hinblick auf diese Problematik stellt sich die Erfindung die Aufgabe, eine Dämpfungsvorrichtung der eingangs genannten Gattung zur Verfügung zu stellen, die auch bei Einsatz für Fluide wechselnder Art rationell und kostengünstig einsetzbar ist.

Erfindungsgemäß ist diese Aufgabe durch eine Dämpfungsvorrichtung gelöst, die die Merkmale des Patentanspruchs 1 in seiner Gesamtheit aufweist.

Eine wesentliche Besonderheit der Erfindung besteht darin, dass die benachbart angrenzenden Gehäusekomponenten, die aus den Wandteilen des Speichergehäuses und dem obenliegenden Gehäuseteil gebildet sind, mittels einer Überwurfmutter aneinander trennbar festgelegt sind.

Es ist ferner vorgesehen, dass als Bestandteil des Speichergehäuses ein Dämpfergehäuse mit einem zweiten Fluidraum vorgesehen ist, der vom mit Druckpulsationen behafteten Fluid durchströmbar ist und ein zweites bewegliches Trennelement enthält, das den zweiten Fluidraum von dem ersten Fluidraum des Hydrospeichers totraumfrei trennt. Dadurch, dass das Fluid, das sich in dem Fluidraum des Hydrospeichers befindet und dessen Trennelement beaufschlagt, durch das zweite Trennelement von dem zu dämpfenden Fluid separiert ist, bleibt das zu dämpfende Fluid außer Kontakt mit dem im Fluidraum des Hydrospeichers befindlichen, und dessen Trennelement druckbeaufschlagenden Fluid. Obwohl der Fluidraum des Hydrospeichers über das bewegliche zweite Trennelement im Betrieb durch die Druckpulsationen des zu dämpfenden Fluids druckbeaufschlagt ist, so dass der Hydrospeicher das dämpfende Druckpolster zur Verfügung stellt, beschränken sich die durchzuführenden Reinigungsmaßnahmen ausschließlich auf das Dämpfergehäuse, das allein mit dem zu dämpfenden Fluid in Kontakt kommt. Da das zweite Trennelement den im Dämpfergehäuse befindlichen zweiten Fluidraum totraumfrei begrenzt, kann die Reinigung in einfacher Weise durch einen Spülvorgang des Dämpfergehäuses durchgeführt werden. Die Maßnahmen für eine Reinigung des Hydrospeichers, einschließlich Demontage und Neuaufbau des Speichers, können entfallen. Das Reinigen der Dämpfungsvorrichtung kann daher sozusagen innerhalb des Betriebsprozesses erfolgen, so dass längere Stillstandszeiten vermieden sind.

Mit Vorteil kann das Dämpfergehäuse am Speichergehäuse abnehmbar angebracht sein. Bei einem Wechsel des zu dämpfenden Fluides kann daher auch so vorgegangen werden, dass der Austausch eines zuvor betriebenen Dämpfergehäuses mit einem gereinigten neuen Dämpfergehäuse vorgenommen wird.

Mit besonderem Vorteil kann im ersten Fluidraum eine chemisch neutrale Trennflüssigkeit eingesetzt sein, die im Falle des Versagens des zweiten Trennelements keine Kontamination des zu dämpfenden Fluidsystems verursacht.

Bei vorteilhaften Ausführungsbeispielen ist zumindest eines der Trennelemente durch eine Membran gebildet, wobei bevorzugt beide Trennelemente durch je eine Membran gebildet sind.

Bei besonders vorteilhaften Ausführungsbeispielen ist der im Dämpfergehäuse befindliche zweite Fluidraum durch einen kreiszylinderförmigen Trog gebildet, dessen Innenraum in Richtung des Hydrospeichers vom zweiten Trennelement begrenzt ist und der zueinander gegenüberliegende Fluidein- und Fluidauslässe aufweist.

Diesbezüglich kann die Anordnung mit Vorteil so getroffen sein, dass zur Bildung einer Zentrifugalspülung des Innenraums des Troges zumindest der Fluideinlass in zur Innenwand des Troges schräger Richtung in den Innenraum einmündet. Durch einen dadurch erzeugten Zykloneffekt ist eine besonders effektive Reinigung mittels eines Spülvorgangs erreichbar.

Ein verstärkter Zykloneffekt ist erreichbar, wenn Fluidein- und Fluidauslass, bezogen auf die Gehäuseachse, zueinander höhenversetzt sind.

Die das erste Trennelement bildende Membran des Hydrospeichers ist zumindest in dessen Endstellung halbkugelförmig in Richtung des Dämpfergehäuses gewölbt und vorzugsweise durch eine Rollmembran gebildet.

Bei besonders vorteilhaften Ausführungsbeispielen begrenzt die das zweite Trennelement bildende Membran in jedem ihrer Bewegungszustände den Innenraum des Dämpfergehäuses totraumfrei und ist an der Trennstelle zwischen Speichergehäuse und Dämpfergehäuse angelenkt.

Für eine völlig totraumfreie Ausbildung des Innenraums des Dämpfergehäuses ist die den Innenraum des Troges des Dämpfergehäuses begrenzende Membran durch eine Flachmembran gebildet. Dergestalt begrenzt die Membran einmal mit positiver, einmal mit negativer Vor- bzw. Einwölbung den Strömungsraum respektive den zweiten Fluidraum. Da darüber hinaus die Membran endseitig im Speichergehäuse eingespannt ist, entsteht kein Raum zwischen Membran und zugehörigen Wandteilen des Speichergehäuses, der ansonsten ungewollt der Aufnahme von Verschmutzungen, auch in Form parasitärer Mikroben etc., dienen könnte. Insbesondere kommt die bewegbare Membrananordnung ohne "Hinterschnitt"-Bildung aus.

Um den an den Werkstoff der Membranen zu stellenden Anforderungen bei den jeweiligen Anwendungen gerecht zu werden, ist die Anordnung mit Vorteil so getroffen, dass zumindest eine Membran, vorzugsweise beide Membranen, aus PTFE oder einem Elastomer und besonders bevorzug beide Membranen, aus PTFE oder einem Elastomer und besonders bevorzugt aus einer Mischform gebildet ist bzw. sind, die PTFE, ein Gewebe und ein Elastomer enthält.

Das Speichergehäuse und das Dämpfergehäuse sind mit Vorteil durch eine lösbare Schraubverbindung miteinander verbunden.

Hinsichtlich des Hydrospeichers kann die Anordnung mit Vorteil so getroffen sein, dass die Anlenkstelle der Membran des Hydrospeichers zwischen trennbaren Gehäuseteilen des Speichergehäuses klemmend festgelegt ist.

Ferner kann in dem Gehäuseteil des Speichergehäuses, an dem die Schraubverbindung mit dem Dämpfergehäuse gebildet ist, ein Füllanschluss für die Befüllung des ersten Fluidraums mit der Trennflüssigkeit ausgebildet sein.

Um die Reinheitsanforderungen zu erfüllen, sind bei vorteilhaften Ausführungsbeispielen die medienberührenden Metallteile elektropoliert ausgeführt.

Nachstehend ist die Erfindung anhand eines in der Zeichnung dargestellten Ausführungsbeispiels im Einzelnen erläutert. Es zeigen:
- Fig. 1: einen Längsschnitt des Ausführungsbeispiels der erfindungsgemäßen Dämpfungsvorrichtung; und
- Fig. 2: einen schematisch vereinfacht und abgebrochen gezeichneten Horizontalschnitt des Gehäusetopfes des Dämpfergehäuses des Ausführungsbeispiels nach der Fig.1.

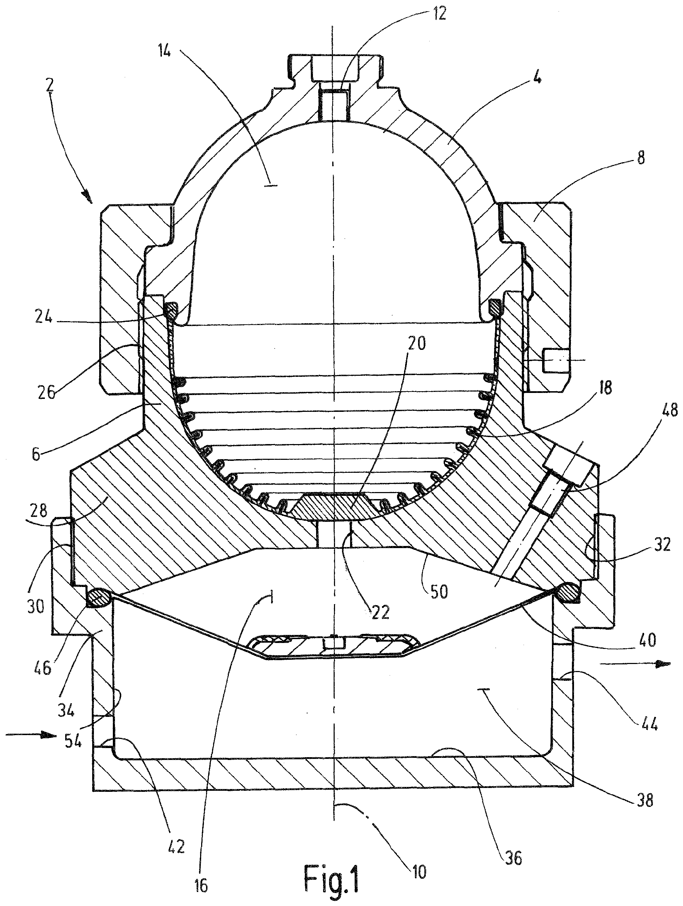

Das in der Zeichnung dargestellte Ausführungsbeispiel weist einen Hydrospeicher in Form eines als Ganzes mit 2 bezeichneten hydropneumatischen Membranspeichers 2 auf, der in seiner Bauweise im Wesentlichen dem in DE 10 2007 003 724 A1 gezeigten Druckspeicher entspricht. Das Speichergehäuse ist mehrteilig aus Gehäuseteilen 4 und 6 aufgebaut, die mittels einer Überwurfmutter 8 aneinander trennbar festgelegt sind. Das in Fig. 1 obenliegende Gehäuseteil 4 hat die Form einer halben Hohlkugel, an der sich ein zur Hochachse 10 koaxial gelegener Füllanschluss 12 für ein Arbeitsgas, wie H₂, befindet. Die Innenwand des unteren Gehäuseteils 6 besitzt die Form einer halbkugelförmigen Kalotte. Als Membran, die das bewegliche Trennelement zwischen an den Füllanschluss 12 angrenzender Gasseite 14 und dem ersten Fluidraum 16 des Speichers 2 bildet, ist eine Rollmembran 18 vorgesehen. Diese ist in der in Fig. 1 gezeigten Endstellung halbkugelförmig gewölbt und liegt an der Innenwand des unteren Gehäuseteils 6 an, wobei eine zentral gelegene, zur Achse 10 koaxiale Endverstärkung 20 der Rollmembran 18 einen Wanddurchgang 22 im unteren Gehäuseteil 6 überdeckt, der Bestandteil des ersten Fluidraums 16 ist. Der Umfangsrand der Rollmembran 18 weist, wie bei derartigen Membranen üblich, einen verstärkenden Randwulst 24 auf, mit dem die Rollmembran 18 an der Verbindungsstelle zwischen oberem Gehäuseteil 4 und unterem Gehäuseteil 6 klemmend angelenkt ist.

Das Gehäuseteil 6 weist unterhalb eines für die Verschraubung mit der Überwurfmutter 8 vorgesehenen Außengewindes 26 ein im Außendurchmesser vergrößertes, kreiszylindrisches Endteil 28 auf, an dem sich ein weiteres Außengewinde 30 befindet. Dieses bildet zusammen mit einem Innengewinde 32 am Umfangsrand eines Dämpfergehäuses 34 eine Verschraubung, mittels deren das Dämpfergehäuse 34, als weiterem Bestandteil des Speichergehäuses, an dessen Gehäuseteil 6 lösbar anbringbar ist. Der Innenraum des Dämpfergehäuses 34 hat die Form eines kreiszylindrischen Gehäusetopfes mit geschlossenem, ebenflächigem Boden 36. Der Innenraum des Troges bildet mit dem an den Boden 36 angrenzenden Teil einen zweiten Fluidraum 38, der von dem ersten Fluidraum 16, der sich über den Durchgang 22 bis zur Außenseite der Rollmembran 18 erstreckt und den dem Hydrospeicher 2 zugehörigen Fluidraum bildet, von einer ein zweites bewegliches Trennelement bildenden Flachmembran 40 getrennt ist.

Der zweite Fluidraum 38 im Dämpfergehäuse 34 ist von dem zu dämpfenden Fluid durchströmbar und weist an zueinander diametral gegenüberliegenden Seiten einen Fluideinlass 42 und einen Fluidauslass 44 auf. Einlass 42 und Auslass 44 sind, wie Fig. 1 zeigt, in Richtung der Achse 10 zueinander höhenversetzt, wobei der Einlass 42 dem Boden 36 benachbart ist. Die Flachmembran 40 weist eine umfängliche Verstärkung in Form eines Randwulstes 46 auf, mit dem sie an der Trennstelle zwischen Dämpfergehäuse 34 und Gehäuseendteil 28 des Hydrospeichers 2 mittels der durch das Außengewinde 30 und das Innengewinde 32 gebildeten Verschraubung durch Verklemmen angelenkt ist. Die Flachmembran 40 überspannt so den zweiten Fluidraum 38 im Dämpfergehäuse 34 totraumfrei, also ohne Bildung eines Hinterschnittes indem sich Verschmutzungen oder Rückstände ungewollt ansammeln könnten. Für die Befüllung des ersten, dem Hydrospeicher 2 zugehörigen ersten Fluidraums 16 ist im Gehäuseendteil 28 ein Füllanschluss 48 zum Einbringen einer Trennflüssigkeit vorgesehen.

Die Fig. 1 zeigt einen Betriebszustand, bei dem in dem vom zu dämpfenden Fluid durchströmbaren zweiten Fluidraum 38 kein Systemdruck herrscht, so dass sich sowohl die Rollmembran 18 als erstes Trennelement und die Flachmembran 40 als zweites Trennelement unter Einfluss des auf der Gasseite 14 des Hydrospeichers 2 herrschenden Vorfülldrucks sich in einer nach unten gewölbten Endstellung befinden, wobei die Rollmembran 18 an der Gehäuseinnenwand anliegt. Die Flachmembran 40 befindet sich in einem Abstand von der unteren Endfläche 50 des Gehäuseendteils 28. Wie gezeigt, ist die Endfläche 50 nicht eben, sondern in Richtung auf den zentralen Durchgang 22 hin muldenartig vertieft, so dass für Arbeitsbewegungen der Flachmembran 40 über die Ebene des Randwulstes 46 hinaus nach oben ein Freiraum gebildet ist. Im Dämpferbetrieb, bei dem im zweiten Fluidraum 38 der Systemdruck mit den zu dämpfenden Druckpulsationen wirksam ist, ist dieser über die Flachmembran 40 und die angrenzende inkompressible Trennflüssigkeit an der Außenseite der Rollmembran 18 des den Dämpfungsspeicher bildenden Hydrospeichers 2 wirksam. Als Trennflüssigkeit ist eine chemisch neutrale Flüssigkeit vorgesehen, so dass bei einem möglichen Versagen der Flachmembran 40 keine Kontamination des angeschlossenen reinen Fluidsystems verursacht wird.

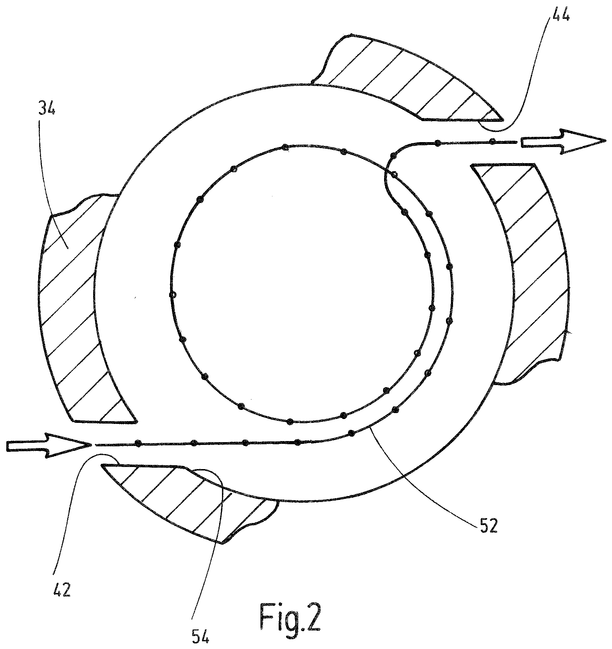

Für eine Reinigung, beispielsweise bei einem Wechsel des zu dämpfenden Fluids, ist der zweite Fluidraum 38, ohne dass eine Demontage des Hydrospeichers 2 erforderlich wäre, mittels einer Spülflüssigkeit durchspülbar. Da die Flachmembran 40 den Fluidraum 38 völlig totraumfrei begrenzt, sind dadurch sämtliche Fluidreste entfernbar. Wie die Fig. 2 zeigt, sind Fluideinlass 42 und -auslass 44 nicht nur zueinander höhenversetzt, sondern der Einlass 42 gibt für das einströmende Fluid eine zur Troginnenwand 54 schräg verlaufende Strömungsrichtung vor, die im Trog des Dämpfergehäuses 34 eine Tangentialströmung 52 erzeugt, so dass sich im Innenraum des Troges eine Zentrifugalspülung entwickelt. Dadurch sind nicht nur Fluidreste besonders sicher ausspülbar, sondern der Zykloneffekt im Trog verhindert auch die Gefahr, dass sich im Dämpferbetrieb Agglomerate des Fluids an der Troginnenwand 54 anlagern.

Die Membranen 18 und 40 sind aus einem Werkstoff, der den Anforderungen der jeweiligen Anwendung gerecht wird. Hierfür kann PTFE oder auch ein Elastomer oder eine Mischform vorgesehen sein. Mit Vorteil kann eine Mischform vorgesehen sein, die PTFE, ein Gewebe und ein Elastomer enthält. Ein solches Material ist hitzebeständig, universal einsetzbar und mit der Lebensmittelforderung (FDA) kompatibel. Um die Reinheitsanforderungen besonders sicher zu erfüllen, sind bei der erfindungsgemäßen Dämpfungsvorrichtung Metallteile, die mit Medien in Berührung sind, elektropoliert ausgeführt.

## Patentansprüche

1. Dämpfungsvorrichtung für mit Druckpulsationen behaftete Fluide, mit mindestens einem Hydrospeicher (2), dessen Speichergehäuse (4, 6, 34) ein erstes bewegliches Trennelement (18) enthält, das eine Gasseite (14) von einem ersten Fluidraum (16) trennt und durch ein im ersten Fluidraum (16) befindliches Fluid druckbeaufschlagbar ist, wobei als Bestandteil des Speichergehäuses (4, 6, 34) ein Dämpfergehäuse (34) mit einem zweiten Fluidraum (38) vorgesehen ist, der vom mit Druckpulsationen behafteten Fluid durchströmbar ist und ein zweites bewegliches Trennelement (40) enthält, das den zweiten Fluidraum (38) von dem ersten Fluidraum (16) des Hydrospeichers (2) totraumfrei trennt, wobei zwischen den beiden bewegbaren Trennelementen (18, 40) Wandteile (6) des Speichergehäuses (4, 6, 34) verlaufen, die den ersten Fluidraum (16) überspannen und an die sich die beiden Trennelemente (18, 40) in ihrer einen voll ausgelenkten Stellung anlegen, wobei das Speichergehäuse (4, 6, 34) aus den folgenden Gehäusekomponenten aufgebaut ist:
- dem Dämpfergehäuse (34),
- den Wandteilen (6) des Speichergehäuses (4, 6, 34), die den ersten Fluidraum (16) überspannen sowie
- einem obenliegenden Gehäuseteil (4), das die Gasseite (14) mit begrenzt,
wobei die jeweils einander benachbart angrenzenden Gehäusekomponenten mittels Schraubverbindungen aneinander festgelegt sind, wobei die benachbart angrenzenden Gehäusekomponenten, die aus den Wandteilen (6) des Speichergehäuses (6) und dem obenliegenden Gehäuseteil (4) gebildet sind, mittels einer Überwurfmutter (8) aneinander trennbar festgelegt sind.

2. Dämpfungsvorrichtung nach Anspruch 1, **dadurch gekennzeichnet, dass** das Dämpfergehäuse (34) am Speichergehäuse (4, 6) abnehmbar angebracht ist.

3. Dämpfungsvorrichtung nach Anspruch 1 oder 2, **dadurch gekennzeichnet, dass** im ersten Fluidraum (16) eine chemisch neutrale Trennflüssigkeit eingesetzt ist, die im Falle des Versagens des zweiten Trennelements (40) keine Kontamination des zu dämpfenden Fluidsystems verursacht.

4. Dämpfungsvorrichtung nach einem der vorstehenden Ansprüche, **dadurch gekennzeichnet, dass** zumindest eines der Trennelemente, vorzugsweise beide Trennelemente, durch eine Membran (18, 40) gebildet ist bzw. sind.

5. Dämpfungsvorrichtung nach Anspruch 1, **dadurch gekennzeichnet, dass** die den ersten Fluidraum (16) überspannenden Wandteile (6) des Speichergehäuses (4, 6) einen permanenten Durchgang (22) aufweisen, der zwei benachbarte Teilräume miteinander verbindet, von denen ein Teilraum von dem ersten Trennelement (18) und der andere Teilraum von dem zweiten Trennelement (40) begrenzt ist.

6. Dämpfungsvorrichtung nach einem der vorstehenden Ansprüche, **dadurch gekennzeichnet, dass** der im Dämpfergehäuse (34) befindliche zweite Fluidraum (38) durch einen kreiszylinderförmigen Trog gebildet ist, dessen Innenraum in Richtung des Hydrospeichers (2) vom zweiten Trennelement (40) begrenzt ist und der zueinander gegenüberliegende Fluidein- (42) und Fluidauslässe (44) aufweist.

7. Dämpfungsvorrichtung nach Anspruch 6, **dadurch gekennzeichnet, dass** zur Bildung einer Zentrifugalspülung des Innenraums des Troges zumindest der Fluideinlass (42) in zur Innenwand (54) des Troges schräger Richtung in den Innenraum einmündet.

8. Dämpfungsvorrichtung nach Anspruch 6 oder 7, **dadurch gekennzeichnet, dass** Fluidein- (42) und Fluidauslass (44), bezogen auf die Gehäuseachse (10), zueinander höhenversetzt sind.

9. Dämpfungsvorrichtung nach Anspruch 7 oder 8, **dadurch gekennzeichnet, dass** in dem zu bedämpfenden Fluidraum (38) im Betrieb eine Fluid-Zyklonalströmung stattfindet, in dem der Fluideinlass (42) sowie der Fluidauslass (44) sowohl in horizontaler als auch in vertikaler Richtung zueinander versetzt im Dämpfergehäuse (34) angeordnet sind.

10. Dämpfungsvorrichtung nach Anspruch 4, **dadurch gekennzeichnet, dass** die das erste Trennelement bildende Membran (18) des Hydrospeichers (2) zumindest in dessen Endstellung halbkugelförmig in Richtung des Dämpfergehäuses (34) gewölbt und vorzugsweise durch eine Rollmembran (18) gebildet ist.

11. Dämpfungsvorrichtung nach Anspruch 4 oder Anspruch 10, **dadurch gekennzeichnet, dass** die das zweite Trennelement bildende Membran (40) in jedem ihrer Bewegungszustände den Innenraum des Dämpfergehäuses (34) totraumfrei begrenzt und an der Trennstelle zwischen Speichergehäuse (4, 6) und Dämpfergehäuse (34) angelenkt ist.

12. Dämpfungsvorrichtung nach Anspruch 4 und einem der Ansprüche 7 bis 11, **dadurch gekennzeichnet, dass** die den Innenraum des Troges des Dämpfergehäuses (34) begrenzende Membran durch eine Flachmembran (40) gebildet ist.

13. Dämpfungsvorrichtung nach einem der Ansprüche 4, 10 bis 12, **dadurch gekennzeichnet, dass** zumindest eine Membran (18, 40), vorzugsweise beide Membranen (18, 40), aus PTFE oder einem Elastomer und besonders bevorzugt aus einer Mischform gebildet ist bzw. sind, die PTFE, ein Gewebe und ein Elastomer enthält.

14. Dämpfungsvorrichtung nach einem der Ansprüche 4, 10 bis 13, **dadurch gekennzeichnet, dass** die Anlenkstelle der Membran (18, 40) des Hydrospeichers (2) zwischen trennbaren Gehäuseteilen (4, 6) des Speichergehäuses klemmend festgelegt ist.

15. Dämpfungsvorrichtung nach Anspruch 3, **dadurch gekennzeichnet, dass** in dem Gehäuseteil (28) des Speichergehäuses (4, 6), an dem die Schraubverbindung (30, 32) mit dem Dämpfergehäuse (34) gebildet ist, ein Füllanschluss (48) für die Befüllung des ersten Fluidraums (16) mit der Trennflüssigkeit ausgebildet ist.

16. Dämpfungsvorrichtung nach einem der vorstehenden Ansprüche, **dadurch gekennzeichnet, dass** medienberührende Metallteile elektropoliert ausgeführt sind.

## Claims

1. Damping device for fluids affected by pressure pulses, comprising at least one hydraulic accumulator (2), the accumulator housing (4, 6, 34) of which includes a first movable separation element (18), which separates a gas side (14) from a first fluid chamber (16) and to which pressure can be applied by a fluid located in the first fluid chamber (16), wherein a damper housing (34) having a second fluid chamber (38) is provided as a component of the accumulator housing (4, 6, 34), the fluid affected by pressure pulses being able to flow through said second fluid chamber, which includes a second movable separation element (40) that separates the second fluid chamber (38) from the first fluid chamber (16) of the hydraulic accumulator (2) without any dead space, wherein wall parts (6) of the accumulator housing (4, 6, 34) run between the two movable separation elements (18, 40) and span the first fluid chamber (16), the two separation elements (18, 40) being positioned against said wall parts when in their fully deflected position, wherein the accumulator housing (4, 6, 34) is built out of the following housing components:
- the damper housing (34),
- the wall parts (6) of the accumulator housing (4, 6, 34) which span the first fluid chamber (16), and
- an upper housing part (4) that also delimits the gas side (14),
wherein the mutually adjacently adjoining housing components are secured together by means of screw connections, wherein the adjacently adjoining housing components, formed of the wall parts (6) of the accumulator housing (6) and the upper housing part (4), are separably secured together by means of a union nut (8).

2. Damping device according to claim 1, **characterised in that** the damper housing (34) is removably attached to the accumulator housing (4, 6).

3. Damping device according to claim 1 or claim 2, **characterised in that** a chemically neutral separation liquid is used in the first fluid chamber (16) and does not cause the fluid system being damped to be contaminated if the second separation element (40) fails.

4. Damping device according to any of the preceding claims, **characterised in that** at least one of the separation elements, preferably both separation elements, is/are formed by a diaphragm (18, 40).

5. Damping device according to claim 1, **characterised in that** the wall parts (6) of the accumulator housing (4, 6) which span the first fluid chamber (16) have a permanent passage opening (22) that interconnects two adjacent sub-chambers, of which one sub-chamber is delimited by the first separation element (18) and the other sub-chamber is delimited by the second separation element (40).

6. Damping device according to any of the preceding claims, **characterised in that** the second fluid chamber (38) located in the damper housing (34) is formed by a circular-cylindrical trough, the interior of which is delimited by the second separation element (40) in the direction of the hydraulic accumulator (2) and which has mutually opposite fluid inlets (42) and fluid outlets (44).

7. Damping device according to claim 6, **characterised in that**, to generate centrifugal flushing of the interior of the trough, at least the fluid inlet (42) opens into the interior in a diagonal direction with respect to the inner wall (54) of the trough.

8. Damping device according to claim 6 or claim 7, **characterised in that** the fluid inlet (42) and fluid outlet (44) are vertically offset from one another in relation to the housing axis (10).

9. Damping device according to claim 7 or claim 8, **characterised in that** a fluid cyclone flow occurs during operation in the fluid chamber (38) being damped owing to the fluid inlet (42) and the fluid outlet (44) being arranged in the damper housing (34) at an offset from one another in both the horizontal and the vertical direction.

10. Damping device according to claim 4, **characterised in that** the diaphragm (18) of the hydraulic accumulator (2), which diaphragm forms the first separation element, is curved in a hemispherical manner in the direction of the damper housing (34) at least when in its end position and is preferably formed by a roller diaphragm (18).

11. Damping device according to claim 4 or claim 10, **characterised in that**, in each one of its movement states, the diaphragm (40) forming the second separation element delimits the interior of the damper housing (34) without any dead space and is coupled to the separation point between the accumulator housing (4, 6) and the damper housing (34).

12. Damping device according to claim 4 and any of claims 7 to 11, **characterised in that** the diaphragm delimiting the interior of the trough of the damper housing (34) is formed by a flat diaphragm (40).

13. Damping device according to any of claims 4 and 10 to 12, **characterised in that** at least one diaphragm (18, 40), preferably both diaphragms (18, 40), is/are made of **PTFE or** an elastomer and particularly preferably of a mixed form that contains PTFE, a woven fabric and an elastomer.

14. Damping device according to any of claims 4 and 10 to 13, **characterised in that** the coupling point of the diaphragm (18) of the hydraulic accumulator (2) is clampingly secured between separable housing parts (4, 6) of the accumulator housing.

15. Damping device according to claim 3, **characterised in that** a filling connection (48) for filling the first fluid chamber (16) with the separation liquid is formed **in that** housing part (28) of the accumulator housing (4, 6) at which the screw connection (30, 32) to the damper housing (34) is formed.

16. Damping device according to any of the preceding claims, **characterised in that** metal parts coming into contact with media are configured in an electropolished manner.

## Revendications

1. Dispositif amortisseur pour des fluides soumis à des pulsations de pression, comprenant au moins un accumulateur (2) hydraulique, dont l'enveloppe (4, 6, 34) contient un premier élément (18) mobile de séparation, qui sépare un côté (14) pour du gaz d'un premier espace (16) pour du fluide et peut être alimenté en pression par un fluide se trouvant dans le premier espace (16) pour du fluide, dans lequel, comme constituant de l'enveloppe (4, 6, 34) de l'accumulateur, il est prévu une enveloppe (34) d'amortisseur comprenant un deuxième espace (38) pour du fluide, dans lequel peut passer le fluide soumis à des pulsations de pression et qui contient un deuxième élément (40) mobile de séparation, qui sépare, sans espace mort, le deuxième espace (38) pour du fluide du premier espace (16) pour du fluide de l'accumulateur (2) hydraulique, dans lequel, entre les deux éléments (18, 40) mobiles de séparation, s'étendent des parties (6) de paroi de l'enveloppe (4, 6, 34) de l'accumulateur, qui recouvrent le premier espace (16) pour du fluide et auxquelles les deux éléments (18, 40) de séparation s'appliquent dans leur position entièrement déployée, dans lequel l'enveloppe (4, 6, 34) de l'accumulateur est constituée à partir des composants d'enveloppe suivants :
- l'enveloppe (34) d'amortisseur,
- des parties (6) de paroi de l'enveloppe (4, 6, 34) de l'accumulateur, qui recouvrent le premier espace (16) pour du fluide, ainsi que
- une partie (4) d'enveloppe se trouvant en haut, qui délimite le côté (14) pour du gaz,
dans lequel les composants de l'enveloppe contigus voisin l'un de l'autre sont fixés les uns aux autres au moyen de vissages, dans lequel les composants de l'enveloppe contigus voisins, qui sont formés des parties (6) de paroi de l'enveloppe (6) de l'accumulateur et de la partie (4) d'enveloppe se trouvant en haut, sont fixés les uns aux autres de manière séparable au moyen d'un écrou (8) à chapeau.

2. Dispositif amortisseur suivant la revendication 1, **caractérisé en ce que** l'enveloppe (34) de l'amortisseur est montée sur l'enveloppe (4, 6) de l'accumulateur de manière à pouvoir être retirée.

3. Dispositif amortisseur suivant la revendication 1 ou 2, **caractérisé en ce que**, dans le premier espace (16) pour du fluide, est inséré un liquide de séparation neutre chimiquement, qui, dans le cas de la défaillance du deuxième élément (40) de séparation, ne provoque pas de contamination du système de fluide à amortir.

4. Dispositif amortisseur suivant l'une des revendications précédentes, **caractérisé en ce que** le au moins l'un des éléments de séparation, de préférence les deux éléments de séparation, est ou sont formés par une membrane (18, 40).

5. Dispositif amortisseur suivant la revendication 1, **caractérisé en ce que** les parties (6) de paroi recouvrant le premier espace (16) pour du fluide de l'enveloppe (4, 6) de l'accumulateur ont un passage (22) permanent, qui met en communication deux espaces partiels voisins, dont un espace partiel est délimité par le premier élément (18) de séparation et l'autre espace partiel par le deuxième élément (40) de séparation.

6. Dispositif amortisseur suivant l'une des revendications précédentes, **caractérisé en ce que** le deuxième espace (38) pour du fluide se trouvant dans l'enveloppe (34) de l'amortisseur est formé d'une auge en forme de cylindre de section droite circulaire, dont l'espace intérieur en direction de l'accumulateur (2) hydraulique est délimité par le deuxième élément (40) de séparation et qui a des entrée (42) et sortie (44) pour du fluide opposées l'une à l'autre.

7. Dispositif amortisseur suivant la revendication 6, **caractérisé en ce que**, pour la formation d'un lavage centrifuge de l'espace intérieur de l'auge, au moins l'entrée (42) pour du fluide débouche dans l'espace intérieur dans une direction inclinée par rapport à la paroi (54) intérieure de l'auge.

8. Dispositif amortisseur suivant la revendication 6 ou 7, **caractérisé en ce que** l'entrée (42) et la sortie (44) pour du fluide sont, rapportées à l'axe (10) de l'enveloppe, décalées en hauteur l'une par rapport à l'autre.

9. Dispositif amortisseur suivant la revendication 7 ou 8, **caractérisé en ce que**, dans l'espace (38) pour du fluide à amortir, a lieu, en fonctionnement, un écoulement en cyclone du fluide, dans lequel l'entrée (42) pour du fluide ainsi que la sortie (44) pour du fluide sont montées dans l'enveloppe (34) de l'amortisseur de manière décalée l'une de l'autre tant dans la direction horizontale qu'également dans la direction verticale.

10. Dispositif amortisseur suivant la revendication 4, **caractérisé en ce que** la membrane (18) de l'accumulateur (2) hydraulique formant le premier élément de séparation est, au moins dans sa position d'extrémité, cintrée en forme de demi-sphère dans la direction de l'enveloppe (34) de l'amortisseur et est formée de préférence par une membrane (18) en rouleau.

11. Dispositif amortisseur suivant la revendication 4 ou la revendication 10, **caractérisé en ce que** la membrane (40) formant le deuxième élément de séparation délimite, sans espace mort, dans chacun de ses états de déplacement l'espace intérieur de l'enveloppe (34) de l'amortisseur et est articulée au point de séparation entre l'enveloppe (4, 6) de l'accumulateur et l'enveloppe (34) de l'amortisseur.

12. Dispositif amortisseur suivant la revendication 4 et l'une des revendications 7 à 11, **caractérisé en ce que** la membrane délimitant l'espace intérieur de l'auge de l'enveloppe (34) de l'amortisseur est formée d'une membrane (40) plate.

13. Dispositif amortisseur suivant la revendication 4 et l'une des revendications 10 à 12, **caractérisé en ce qu'**au moins une membrane (18, 40), de préférence les deux membranes (18, 40), est ou respectivement sont en PTFE ou en un élastomère et, d'une manière particulièrement préférée, en une forme mixte, qui contient du PTFE, un tissu et un élastomère.

14. Dispositif amortisseur suivant l'une des revendications 4, 10 à 13, **caractérisé en ce que** le point d'articulation de la membrane (18, 40) de l'accumulateur (2) hydraulique est fixé par collage entre des parties (4, 6) séparables de l'enveloppe de l'accumulateur.

15. Dispositif amortisseur suivant la revendication 3, **caractérisé en ce que**, dans la partie (28) de l'enveloppe (4, 6) de l'accumulateur, sur laquelle le vissage (30, 32) à l'enveloppe (34) de l'amortisseur est formé, est constitué un raccord (48) de remplissage pour remplir le premier espace (16) pour du fluide du liquide de séparation.

16. Dispositif amortisseur suivant l'une des revendications précédentes, **caractérisé en ce que** les parties métalliques en contact avec des fluides sont réalisées en étant électropolies.
